# EUROPEAN PATENT APPLICATION

(11) **EP 0 920 019 A2**
(43) Date of publication of application: **02.06.1999**
(21) Application number: 98306705.9
(22) Date of filing: 21.08.1998
(51) Int. Cl.: G11B 27/30

(54) **Method for cancelling abnormal synchronization signal**

(30) Priority: 21.11.1997 KR 9762050
(71) Applicant: Samsung Electronics Co., Ltd., Suwon-city, Kyungki-do (KR)
(72) Inventor: Kim, Byeong-soo, Kwachun-city, Kyungki-do (KR)
(74) Representative: Chugg, David John

(57) **Abstract**

A method of cancelling an abnormal synchronous signal including the steps of: detecting a predetermined pattern data synchronous signal from input digital data; and deciding that a detected synchronous signal is an actual synchronous signal if the detected synchronous signal has periodicity, and otherwise, annulling the detected synchronous signal. In the above-described method, only a normally-recorded actual synchronous signal is detected while cancelling abnormal synchronous signals from the detected synchronous signals using the periodicity of a synchronous signal and identification information. Thus, normal signal processing can be performed using the detected actual synchronous signal.

## Description

The present invention relates to synchronous signal detection, and more particularly, to a method for cancelling an abnormal synchronous signal using the periodicity of a synchronization signal.

Signal processing and recording/reproduction (or transmission/reception) are digitalized for multimedia applications. In this digital recording/reproduction, a signal is recorded on a recording medium in units of a synchronization block in order to successfully restore the original recorded signal upon reproduction. Also, a synchronization signal of a predetermined pattern is periodically recorded on the recording medium, and detected upon reproduction, to be used as a reference signal for signal processing.

Upon the detection of the synchronization signal, an abnormal synchronous signal other than a desired synchronization signal may possibly be generated according to the state and conditions of a channel, or a synchronization signal may be damaged. Thus, appropriate processing is required. In particular, abnormal synchronization signals are frequently detected in addition to the recorded synchronization signal. Such mis-detected synchronization signals prevents the restoration of the original signal.

With a view to solve or reduce the above problem, it is an objective of the present invention to provide a method for cancelling an abnormal synchronization signal, for a digital recording/reproduction apparatus or a digital transmission/reception apparatus in order to detect only a normal synchronization signal and remove abnormal synchronization signals other than the normal synchronization signal.

It is another aim of embodiments of the present invention to provide a method for cancelling an abnormal synchronization signal, for a digital recording/reproduction apparatus having a standard definition (SD) format, in order to detect only a normal synchronization signal and remove abnormal synchronization signals other than the normal synchronization signal.

According to an aspect of the invention, there is provided a method of cancelling an abnormal synchronous signal, comprising the steps of: (a) detecting a predetermined pattern data synchronous signal from input digital data; and (b) deciding that a detected synchronous signal is an actual synchronous signal if the detected synchronous signal has periodicity, and otherwise, annulling the detected synchronous signal.

The method preferably includes the step of: (c) deciding that the detected synchronous signal is an actual synchronous signal if the detected synchronous signal was not generated by a burst error, determined using a window generated at the position of a predetermined synchronous signal, and otherwise, annulling the detected synchronous signal.

Preferably, in step (b), the detected synchronous signal is decided to be an actual synchronous signal if the detected synchronous signal is periodically detected N times or more, where N is an integer equal to or greater than 1.

According to a second aspect of the invention, there is provided a method of cancelling an abnormal synchronous signal, comprising the steps of: (a) detecting a predetermined pattern data synchronous signal from input digital data; (b) determining whether a detected synchronous signal has periodicity; and (c) deciding that the detected synchronous signal is an actual synchronous signal if identification (ID) information is detected, and otherwise, annulling the detected synchronous signal, when the detected synchronous signal has periodicity.

The method preferably further comprises the step of: (d) deciding that the detected synchronous signal is an actual synchronous signal if the detected synchronous signal was not generated by a burst error, determined using a window generated at the position of a predetermined synchronous signal, and otherwise, annulling the detected synchronous signal.

In step (c), the detected synchronous signal is preferably decided to be an actual synchronous signal if the detected synchronous signal is periodically detected N times or more, where N is an integer equal to or greater than 1.

According to a third aspect of the invention, there is provided a method of cancelling an abnormal synchronous signal in a method of recording digital data in divided pre synchronous blocks and data synchronous blocks and reproducing the recorded digital data, comprising the steps of: (a) detecting a predetermined pattern data synchronous signal from the recorded digital data; and (b) deciding that a detected synchronous signal is an actual synchronous signal if the detected synchronous signal has a first period, and otherwise, annulling the detected synchronous signal.

The method may further comprise the step of: (c) deciding that the detected synchronous signal is an actual synchronous signal if the detected synchronous signal is a data synchronous signal for a data synchronous block having a second period, and otherwise, annulling the detected synchronous signal, when the detected synchronous signal does not have the first period.

The method may further comprise the step of: (d) deciding that the detected synchronous signal is an actual synchronous signal if the detected synchronous signal was not generated by a burst error, determined using a window generated at the position of a predetermined synchronous signal, and otherwise, annulling the detected synchronous signal.

Preferably, in step (b), when pre synchronous signals for the pre synchronous block are periodically detected with the first period, and a first data synchronous signal is then detected with the first period, the detected synchronous signal is decided to be an actual synchronous signal.

In step (c), when the data synchronous signal was periodically detected N times (where N is an integer equal to or greater than 1) with a second period, the detected synchronous signal is preferably decided to be an actual synchronous signal.

According to a yet further aspect of the invention, there is provided a method of cancelling an abnormal synchronous signal in a method of recording digital data in divided pre synchronous blocks and data synchronous blocks and reproducing the recorded digital data, comprising the steps of: (a) detecting a predetermined pattern data synchronous signal from the recorded digital data; (b) determining whether a detected synchronous signal has a first period; and (c) deciding that the detected synchronous signal is an actual synchronous signal if identification (ID) information is detected after the detection of the synchronous signal, and otherwise, annulling the detected synchronous signal, when the detected synchronous signal has the first period.

The method may further comprise the step of: (d) determining whether the detected synchronous signal is a data synchronous signal for a data synchronous block having a second period, when the detected synchronous signal does not have the first predetermined period; and (e) deciding that the detected synchronous signal is an actual synchronous signal if identification (ID) information is detected after the detection of a synchronous signal, and otherwise, annulling the detected synchronous signal, when the detected synchronous signal is a data synchronous signal having the second period.

The method may include the step of: (f) deciding that the detected synchronous signal is an actual synchronous signal if the detected synchronous signal was generated by a burst error, determined using a window generated at the position of a predetermined synchronous signal, and otherwise, annulling the detected synchronous signal.

In step (e), when the data synchronous signal was detected N times (where N is an integer equal to or greater than 1) with a second period, the detected synchronous signal is preferably decided to be an actual synchronous signal.

In step (e), when the detected ID information has continuity with respect to a sequentially-increasing synchronous block number, the detected synchronous signal is preferably determined to be an actual synchronous signal.

In step (c), when pre synchronous signals for the pre synchronous block are periodically detected with the first period, and a first data synchronous signal is then detected with the first period, the detected synchronous signal is preferably decided to be an actual synchronous signal.

In step (c), if pre synchronous signals for the pre synchronous block are detected N times (where N is an integer equal to or greater than 1) or more with the first period, the detected synchronous signal is preferably decided to be an actual synchronous signal using the detected ID information even though a first data synchronous signal was not detected.

Preferably, in step (c), when the detected ID information has continuity with respect to a sequentially-increasing synchronous block number, the detected synchronous signal is determined to be an actual synchronous signal.

For a better understanding of the invention, and to show how embodiments of the same may be carried into effect, reference will now be made, by way of example, to the accompanying diagrammatic drawings, in which:
Figure 1 illustrates an example of abnormal synchronization signal detection occurring in data recorded after parallel-to-serial conversion;
Figure 2 illustrates an example of abnormal synchronization signal detection occurring in reproduced data, caused by channel error;
Figure 3 is a flowchart illustrating a method of cancelling an abnormal synchronization signal, according to an embodiment of the present invention;
Figure 4 is a flowchart illustrating a method of cancelling an abnormal synchronization signal, according to another embodiment of the present invention; and
Figure 5 is a format diagram illustrating recording and reproduction of a digital tape for SD-DVC adopting the method shown in Figure 4.

A digital recording/reproduction apparatus (or a digital transmission/reception apparatus) typically records information serially, i.e., in bit units, and reproduces this recorded information as parallel data, i.e., information word having in byte units. Here, a synchronization signal is necessary as a reference signal.

That is, upon recording, a synchronization signal is recorded at constant intervals. Upon reproduction, serial-to-parallel (S/P) conversion is performed according to the recorded synchronization signal. This synchronization signal is used as the reference signal for several signal processing steps even after being converted into parallel. Thus, the synchronization signal sets a predetermined pattern and is periodically recorded at a determined position. However, upon reproduction, not only the synchronization signal recorded at the determined position is reproduced, but an abnormal synchronization signal is also generated by many phenomena such as a channel error. In the present invention, it is determined which synchronization signal among detected synchronization signals is a normally-recorded actual synchronization signal, the abnormal synchronization signal is removed, and a normal signal processing can be performed using only the actual synchronization signal.

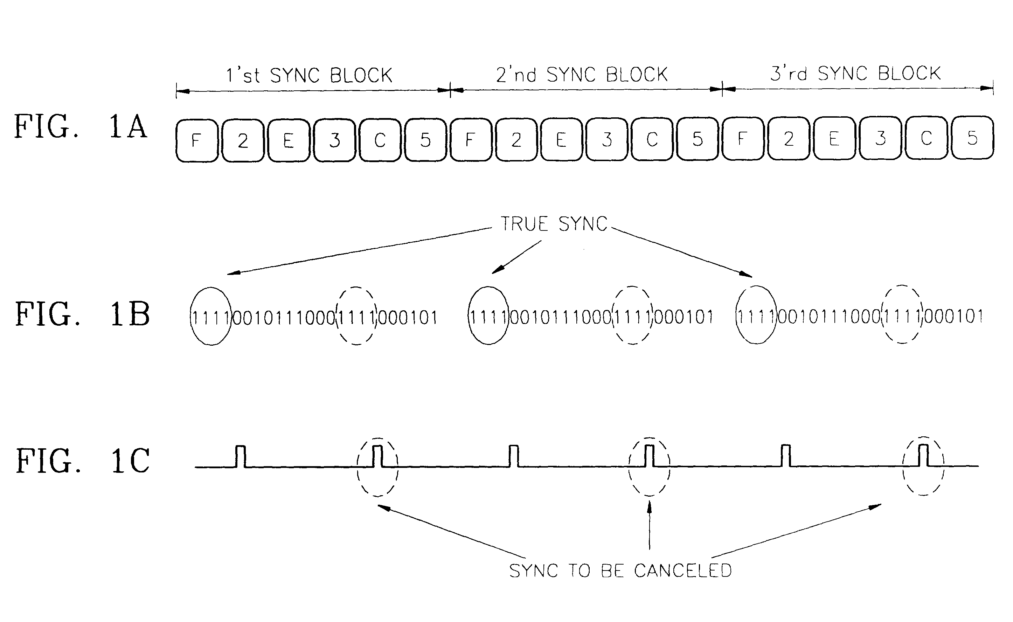

Figure 1 illustrates an abnormal synchronization signal generated in digital data recorded after parallel-to-serial conversion. If one synchronization block has values F, 2, E, 3, C and 5 (hexadecimal), where F is a synchronization pattern, and data is of 4 bits, Figure 1A denotes three consecutive synchronization blocks to be recorded. Synchronization block data as shown in Figure 1A is recorded on a recording medium after undergoing the parallel-to-serial conversion, as shown in Figure 1B. When a synchronization pattern F is searched for from the data recorded on the recording medium, an abnormal synchronization signal pattern same as a synchronization signal pattern circled by a dotted line on a bitstream can be generated in addition to the actual synchronization signal. Accordingly, as shown in Figure 1C, abnormal synchronization signal flags, circled by dotted lines, in addition to the properly-recorded actual synchronization signal, must be removed from the detected synchronization signals upon reproduction.

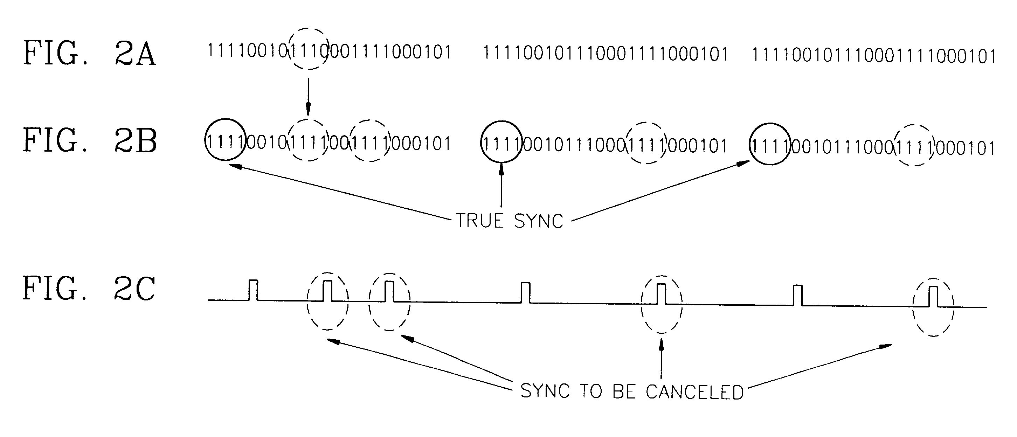

Figure 2 illustrates an abnormal synchronization signal generated in reproduced data due to a channel error, wherein an error is generated in a bitstream on a recording medium, and data similar to a synchronization pattern is reproduced as an abnormal synchronization signal.

That is, an actual bitstream recorded on a recording medium is E (1110) as shown in Figure 2A, and a reproduced bitstream is reproduced as F (1111) due to a channel error as shown in Figure 2B, and can be detected as an abnormal synchronous signal as shown in Figure 2C. In this case, abnormal synchronization signal flags circled by dotted lines must be also removed from the detected synchronization signals.

The abnormal synchronization signal is generated by the P/S conversion as shown in Figure 1 or the channel error as shown in Figure 2. The abnormal synchronization signal also can be generated by several other phenomena, but the present invention allows for that fact.

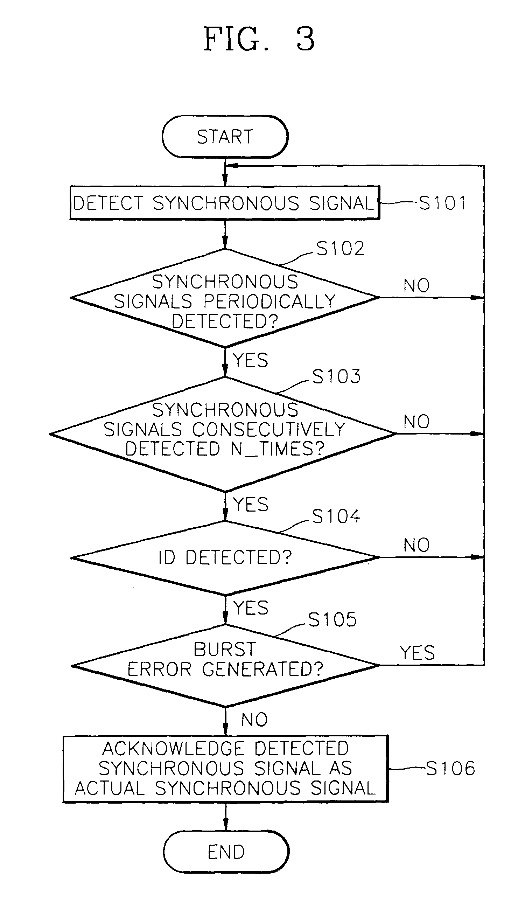

Figure 3 is a flowchart illustrating a method of cancelling an abnormal synchronization signal, according to a first embodiment of the present invention, which can be used in a typical digital recording/reproducing apparatus or digital transmission/reception apparatus.

Referring to Figure 3, a synchronization signal is detected using input reproduction data and a reproduction clock signal, in step S101. A determination of whether the synchronous signal was periodically detected is made, in step S102. If it is determined in step S102 that the detected synchronization signal was not periodic, the procedure returns to step S101 to again detect a synchronous signal.

If it is determined in step S102 that the detected synchronization signal was periodic, a determination of the number of times the detected synchronization signal periodically occurs is made, in step S103. If the synchronization signal is not detected successively N times (N is an integer that is equal to or greater than 1) in step S103, the procedure returns to step S101 to again detect a synchronization signal. If the synchronization signal is periodically detected N times in step S103, it is determined whether identification (ID) information following the synchronization signal is detected.

Here, when the conditions of steps S101, 102 and S103 are all satisfied, i.e., the synchronization signal is periodically detected N times or more, the detected synchronization signal can be determined as an actual synchronous signal. Then, the ID information is detected in step S104 to increase the reliability of the synchronous detection. Alternatively, when the ID value is satisfied, the detected synchronous signal can be determined as the actual synchronous signal. The time of this determination can be set according to system characteristics. After the actual synchronization signal is detected via steps S101 through S104 in this way, the abnormal synchronization signals generated by the phenomena shown in Figures 1 and 2 can be cancelled.

However, the digital recording/reproducing apparatus often accompanies a burst error where errors are successively generated, in addition to a random error. Synchronization patterns same as synchronization signals can be consecutively generated by the burst error. A determination of whether the detected synchronization signal is caused by the burst error is made using a window generated at a predetermined position where the actual synchronous signal is generated, in order to take into account the possibility of burst error, in step S105. If the detected synchronization signal is generated by the burst error in step S105, the procedure returns to step S101 to annul the detected synchronous signal and again detect a synchronous signal. If no burst error is generated in step S105, the detected synchronous signal is acknowledged as the actual synchronous signal, and many process are performed using the actual synchronous signal, in step S106.

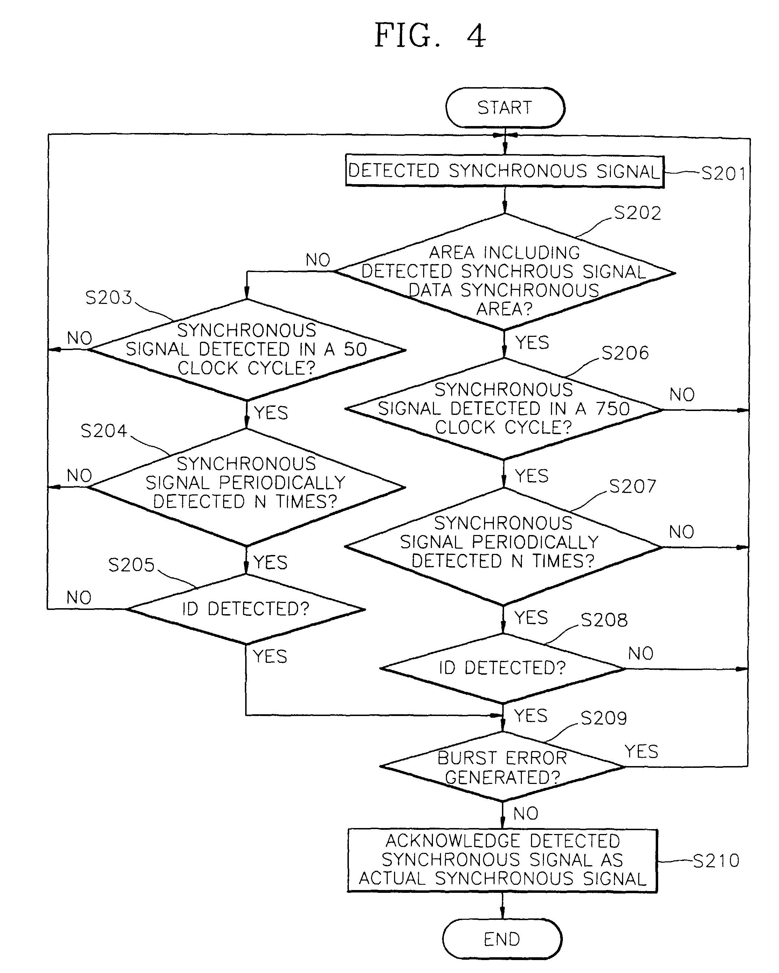

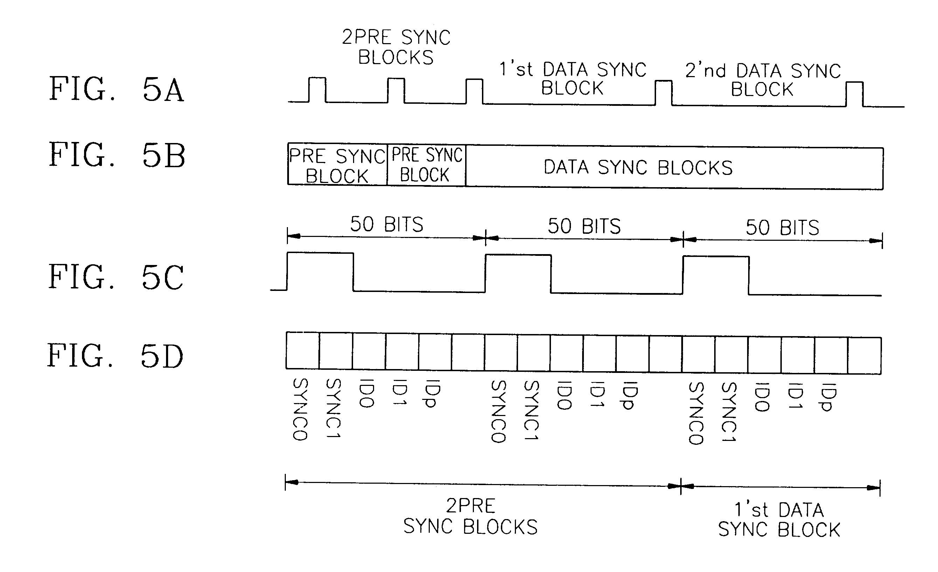

Figure 4 is a flowchart illustrating a method of cancelling an abnormal synchronization signal, according to a second embodiment of the present invention, which can be applied to a standard definition-digital video camcorder (SD-DVC). Referring to Figure 4, synchronization signals are detected according to input reproduction data and a reproduction clock signal, in step S201. Here, the structure of synchronization signals in the SD-DVC will be described referring to Figure 5.

Figure 5 shows the recording and reproduction format of data recorded on a tape of the SD-DVC, in particular, shows an audio or video sector. Here, Figure 5A shows synchronization signal flags indicating the position of a synchronization signal. These synchronization signal flags denote two synchronization signal flags with respect to two pre synchronous blocks of a 50 clock cycle period and several synchronization signal flags with respect to several (149 video sectors and 15 audio sectors) data synchronous blocks of a 750 clock cycle period. Figure 5B shows recorded data (reproduced data) recorded in the two pre synchronous blocks and several data synchronous blocks.

Figures 5C and 5D are magnified views of parts of the synchronization signal flag and the recorded data (reproduced data) shown in Figures 5A and 5B. As shown in Figure 5C, the video sector (audio sector) has two pre synchronous blocks of 50 bits. Since several data synchronous blocks of 750 bits exist, three synchronization signals are consecutively recorded at intervals of 50 clock cycles, and a synchronization signal is then recorded at intervals of 750 clock cycles.

As shown in Figure 5D, data following synchronous signals SYNC0 and SYNC1 is an ID code which comprises ID data IDO and ID1 of two bytes and an ID parity (Idp) of one byte. Here, the second ID data ID1 includes a synchronous block number, and the values of the synchronous block numbers are sequentially increased from the first synchronous signal. The data is entirely comprised of a binary coded hollerith (BCH) error correction code (ECC) code, so a determination of whether the detected synchronous signal is an actual synchronous signal is made by checking the continuity of these synchronous block numbers during reproduction. The first data synchronous block shown in Figure 5D is of 750 bits, but Figure 5D shows only 50 bits including a data synchronous signal.

Meanwhile, when a synchronous signal having a predetermined pattern is detected from a bit stream recorded by the tape format, it is determined whether an area having the detected synchronous signal is an area of a pre sync block or an area of a pure data synch block, in step S202. That is, if the detected synchronous signal has a 750 clock cycle, it is determined that the area having the detected synchronous signal is the area of the data sync block, in step S202.

If the area having the detected synchronous signal is not the area of the dat sync block in step S202, it is determined whether the detected synchronous signal has a 50 clock cycle, in step S203. If the detected synchronous signal does not have the 50 clock cycle, the procedure returns to step S201 T to again detect a synchronous signal. If the detected synchronous signal has the 50 clock cycle in step S203, it is determined whether the synchronous signal is periodically detected N times, in step S204. If the detected synchronous signal does not have periodicity, the procedure returns to step S201 to again detect a synchronous signal. If the detected synchronous signal has periodicity in step S204, the ID is detected after the synchronous signal. A determination of whether the detected ID value has continuity is made in step S205. If the ID value has no continuity, the procedure returns to step S201 to again detect a synchronous signal.

In steps S203 through S205, an actual synchronous signal is detected using the fact that two pre synchronous signals and the first data synchronous signal are recorded and reproduced at intervals of 50 clock cycles three consecutive times. Also, in the present invention, if the two pre synchronous signals are detected but the first data synchronous signal is not detected, the continuity of an ID value is detected to determine whether the detected synchronous signal is an actual synchronous signal.

Meanwhile, if the area where a current synchronous signal is detected is an area of a data synchronous block in step S202, it is determined whether a detected synchronous signal is a synchronous signal having a 750 clock cycle, in step S206. If the detected synchronous signal does not have a 750 clock cycle, the procedure returns to step S201 to again detect a synchronous signal. It is determined whether the synchronous signal is periodically detected N times in the 750 clock cycle, in step S207. If the detected synchronous signal does not have periodicity, the procedure returns to step S201 to again detect a synchronous signal. If the detected synchronous signal has periodicity in step S207, the ID is detected after the synchronous signal. A determination of whether the detected ID value has continuity is made in step S208. If the ID value has no continuity, the procedure returns to step S201 to again detect a synchronous signal.

Here, as shown in Figure 5, the pre synchronous signal is placed at the beginning of an audio/video sector. Thus, after the pre synchronous signal is detected twice, a pre synchronous signal is not detected until a new track starts. Accordingly, when an actual synchronous signal is not detected since an error is generated in the pre synchronous signal, even though the steps S203 through S205 are performed, steps S206 through S208 are performed. The performance of steps S206 through S208 indicates that the pre synchronous block is already passed and data synchronous blocks appear. Since the cycle of the data synchronous signal is 750 clock cycles in these steps, an actual synchronous signal is detected by determining whether the data synchronous signal is detected while satisfying this condition.

Meanwhile, after step S205 or S208, a determination of whether the synchronous signal is detected due to the burst error is made using the window generated at a predetermined position where the actual synchronous signal is generated, in step S209. If the burst error was generated, the procedure returns to step S201 to annul the detected synchronous signal and detect another synchronous signal. If the burst error was not generated in step S209, the detected synchronous signal is acknowledged as the actual synchronous signal, and many processes are performed using the actual synchronous signal, in step S210.

In Figure 4, a method of checking if the detected synchronous signal is the actual synchronous signal is roughly divided into two steps. In the first step, steps S203 through S205 are performed to check if a pre synchronous signal of a 50 clock cycle period is detected. In the second step, when it is impossible to check if the detected pre synchronous signal is an actual synchronous signal since an error was generated in the pre synchronous block, steps S206 through S208 are performed to detect an actual data synchronous signal within the data synchronous block, depending on whether a data synchronous signal of a 750 clock cycle period is detected.

The present invention can be effectively applied to a digital recording/reproducing apparatus or digital transmission/reception apparatus, and is suitable particularly for a digital recording/reproducing apparatus, such as a digital camcorder, a digital VCR, or DVD family products (e.g., a DVD ROM drive, a DVD player, a DVD RAM, etc.), which has been being developed and produced as video and audio signals are fully digitally processed.

According to embodiments of the present invention, while an abnormal synchronous signal is cancelled, only a normally-recorded actual synchronous signal is detected, using the periodicity of the synchronous signal among many similar synchronous signals detected upon reproduction (reception). Thus, normal signal processing can be performed using the detected actual synchronous signal.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of cancelling an abnormal synchronous signal, comprising the steps of:
(a) detecting a predetermined pattern data synchronous signal from input digital data; and
(b) deciding that a detected synchronous signal is an actual synchronous signal if the detected synchronous signal has periodicity, and otherwise, annulling the detected synchronous signal.

2. The method of cancelling an abnormal synchronous signal as claimed in claim 1, wherein in step (b), the detected synchronous signal is decided to be an actual synchronous signal if the detected synchronous signal is periodically detected N times or more, where N is an integer equal to or greater than 1.

3. A method of cancelling an abnormal synchronous signal, comprising the steps of:
(a) detecting a predetermined pattern data synchronous signal from input digital data;
(b) determining whether a detected synchronous signal has periodicity; and
(c) deciding that the detected synchronous signal is an actual synchronous signal if identification (ID) information is detected, and otherwise, annulling the detected synchronous signal, when the detected synchronous signal has periodicity.

4. The method of cancelling an abnormal synchronous signal as claimed in claim 1, 2 or 3, further comprising the step of:
deciding that the detected synchronous signal is an actual synchronous signal if the detected synchronous signal was not generated by a burst error, determined using a window generated at the position of a predetermined synchronous signal, and otherwise, annulling the detected synchronous signal.

5. The method of cancelling an abnormal synchronous signal as claimed in claim 4 as dependent upon claim 3, wherein in step (c), the detected synchronous signal is decided to be an actual synchronous signal if the detected synchronous signal is periodically detected N times or more, where N is an integer equal to or greater than 1.

6. A method of cancelling an abnormal synchronous signal in a method of recording digital data in divided pre synchronous blocks and data synchronous blocks and reproducing the recorded digital data, comprising the steps of:
(a) detecting a predetermined pattern data synchronous signal from the recorded digital data; and
(b) deciding that a detected synchronous signal is an actual synchronous signal if the detected synchronous signal has a first period, and otherwise, annulling the detected synchronous signal.

7. The method of cancelling an abnormal synchronous signal as claimed in claim 6, further comprising the step of:
(c) deciding that the detected synchronous signal is an actual synchronous signal if the detected synchronous signal is a data synchronous signal for a data synchronous block having a second period, and otherwise, annulling the detected synchronous signal, when the detected synchronous signal does not have the first period.

8. The method of cancelling an abnormal synchronous signal as claimed in claim 7, further comprising the step of:
(d) deciding that the detected synchronous signal is an actual synchronous signal if the detected synchronous signal was not generated by a burst error, determined using a window generated at the position of a predetermined synchronous signal, and otherwise, annulling the detected synchronous signal.

9. The method of cancelling an abnormal synchronous signal as claimed in claim 6, 7 or 8, wherein in step (b), when pre synchronous signals for the pre synchronous block are periodically detected with the first period, and a first data synchronous signal is then detected with the first period, the detected synchronous signal is decided to be an actual synchronous signal.

10. The method of cancelling an abnormal synchronous signal as claimed in claim 7, 8 or 9, wherein in step (c), when the data synchronous signal was periodically detected N times (where N is an integer equal to or greater than 1) with a second period, the detected synchronous signal is decided to be an actual synchronous signal.

11. A method of cancelling an abnormal synchronous signal in a method of recording digital data in divided pre synchronous blocks and data synchronous blocks and reproducing the recorded digital data, comprising the steps of:
(a) detecting a predetermined pattern data synchronous signal from the recorded digital data;
(b) determining whether a detected synchronous signal has a first period; and
(c) deciding that the detected synchronous signal is an actual synchronous signal if identification (ID) information is detected after the detection of the synchronous signal, and otherwise, annulling the detected synchronous signal, when the detected synchronous signal has the first period.

12. The method of cancelling an abnormal synchronous signal as claimed in claim 11, further comprising the step of:
(d) determining whether the detected synchronous signal is a data synchronous signal for a data synchronous block having a second period, when the detected synchronous signal does not have the first predetermined period; and
(e) deciding that the detected synchronous signal is an actual synchronous signal if identification (ID) information is detected after the detection of a synchronous signal, and otherwise, annulling the detected synchronous signal, when the detected synchronous signal is a data synchronous signal having the second period.

13. The method of cancelling an abnormal synchronous signal as claimed in claim 12, further comprising the step of:
(f) deciding that the detected synchronous signal is an actual synchronous signal if the detected synchronous signal was generated by a burst error, determined using a window generated at the position of a predetermined synchronous signal, and otherwise, annulling the detected synchronous signal.

14. The method of cancelling an abnormal synchronous signal as claimed in claim 12 or 13, wherein in step (e), when the data synchronous signal was detected N times (where N is an integer equal to or greater than 1) with a second period, the detected synchronous signal is decided to be an actual synchronous signal.

15. The method of cancelling an abnormal synchronous signal as claimed in claim 12, 13 or 14, wherein in step (e), when the detected ID information has continuity with respect to a sequentially-increasing synchronous block number, the detected synchronous signal is determined to be an actual synchronous signal.

16. The method of cancelling an abnormal synchronous signal as claimed in claim 11, 12, 13, 14 or 15, wherein in step (c), when pre synchronous signals for the pre synchronous block are periodically detected with the first period, and a first data synchronous signal is then detected with the first period, the detected synchronous signal is decided to be an actual synchronous signal.

17. The method of cancelling an abnormal synchronous signal as claimed in any of claims 11 to 16, wherein in step (c), if pre synchronous signals for the pre synchronous block are detected N times (where N is an integer equal to or greater than 1) or more with the first period, the detected synchronous signal is decided to be an actual synchronous signal using the detected ID information even though a first data synchronous signal was not detected.

18. The method of cancelling an abnormal synchronous signal as claimed in any of claims 11 to 17, wherein in step (c), when the detected ID information has continuity with respect to a sequentially-increasing synchronous block number, the detected synchronous signal is determined to be an actual synchronous signal.
